# EUROPEAN PATENT APPLICATION

(11) **EP 1 500 740 A1**
(43) Date of publication of application: **26.01.2005**
(21) Application number: 03809852.1
(22) Date of filing: 24.10.2003
(51) Int. Cl.: D06M 15/55, B29B 15/10

(54) **CARBON FIBER STRAND**

(30) Priority: 31.10.2002 JP 2002319003
(71) Applicant: Toho Tenax Co., Ltd., Tokyo 113-0033 (JP)
(72) Inventor: SAKAJIRI, Kouichi, Toho Tenax Co., Ltd., Sunto-gun, Shizuoka 411-8720 (JP); SAEKI, Takao, Toho Tenax Co., Ltd., Sunto-gun, Shizuoka 411-8720 (JP); MUTO, Shinichi, Toho Tenax Co., Ltd., Sunto-gun, Shizuoka 411-8720 (JP); NISHIMURA, Isao, Toho Tenax Co., Ltd., Sunto-gun, Shizuoka 411-8720 (JP); MATSUKI, Toshitsugu, Toho Tenax Co., Ltd., Sunto-gun, Shizuoka 411-8720 (JP)
(74) Representative: Ziebig, Marlene, Dr. Dipl.-Chem.
(86) International application number: PCT/JP2003/013639
(87) International publication number: WO 2004/040055

(57) **Abstract**

The present invention discloses a carbon fiber strand obtained by impregnating a carbon fiber with a sizing agent composition containing a sizing agent comprising at least two kinds of epoxy resins, wherein the sizing agent composition is such that, when it is mixed with a given curing agent at proportions of 100 parts by mass (the sizing agent composition) and 30 parts by mass (the curing agent) to make a composition for estimation, the composition for estimation is heat-treated at 130°C for 2 hours, and the resulting cured material for estimation is measured for dynamic viscoelasticity to obtain its tan δ of α relaxation peak and its tan δ of β relaxation peak, their product α_{tan δ} β_{tan δ} is 0.07 to 0.2. The amount of the sizing agent composition used in impregnation is preferably 0.3 to 5.0% by mass.

## Description

### Technical Field

The present invention relates to a carbon fiber strand suitably used in applications such as resin reinforcing agent and the like. More particularly, the present invention relates to a carbon fiber strand which, when used for production of a composite material (e.g. a carbon fiber-reinforced resin), can give a composite material having sufficient adhesion between the carbon fiber and the matrix resin and being superior in interlaminar shear strength (ILSS) between the matrix resin and the carbon fiber.

### Background Art

Carbon fiber has features of being strong, high in elastic modulus and light as compared with other fibers; therefore, it is in wide use as a reinforcing material for a composite material using a thermoplastic resin or a thermosetting resin as the matrix resin. A composite material reinforced with carbon fiber is light and highly strong and, therefore, is in wide use in various industries including aerospace industry.

The process for producing a composite material using a thermosetting resin includes a process of producing a prepreg of desired shape and molding it. Such a composite material can also be produced by a pultrusion process using a carbon fiber strand and a thermosetting resin, a resin transfer molding (RTM) process, a filament winding (FW) process, a sheet molding compound (SMC) process, a bulk molding compound (BMC) process, a hand lay-up process, etc.

As the thermosetting matrix resin used in production of a thermosetting resin-based composite material, there can be mentioned, for example, epoxy resin, unsaturated polyester resin, vinyl ester resin, and phenolic resin. Of these, epoxy resin, in particular, is preferred because the epoxy resin can produce a composite material well-balanced in heat resistance, physical properties, etc.

As the epoxy resin, there can be mentioned bisphenol A type epoxy resin, polyfunctional epoxy resin produced from a raw material such as tetraglycidylamine, triglycidylamine or the like, novolac type epoxy resin, etc. Bisphenol A type epoxy resin, in particular, is in wide use as a matrix resin because it is superior in adhesivity, physical properties, etc. and is general-purpose.

In producing a prepreg, a carbon fiber strand is processed according to a given procedure. In this processing, the carbon fiber strand is fretted by a guide, etc., which tends to cause fluffing and accordingly makes difficult later handling. In order to avoid this problem, a sizing agent is ordinarily added to the carbon fiber strand. Covering the surface of the carbon fiber strand with the sizing agent can improve the bundle ability and accordingly improve fretting resistance and handleability of the strand.

In general, adhesivity with matrix resin is considered in selection of a sizing agent and, when the matrix resin is an epoxy resin, an epoxy resin is used as the sizing agent (JP-B-62-56266 and JP-A-7-197381).

It was proposed to use a vinyl ester resin as a sizing agent When the matrix resin is an unsaturated matrix resin. In these proposals, however, since no consideration was made as to the adhesivity between sizing agent and carbon fiber, the adhesivity between sizing agent and carbon fiber is insufficient.

Meanwhile, in order to improve the adhesivity between sizing agent and carbon fiber, there were proposed sizing agents having a polar group which may react with a functional group present on the surface of the carbon fiber (JP-A-56-167715, JP-A-63-50573, JP-A-11-93078 and JP-A-2001-20181). A composite material produced using a carbon fiber strand containing such a sizing agent, when measured for its interlaminar shear strength (ILSS), shows a superior value. Incidentally, the interlaminar shear strength (ILSS) of a composite material is a yardstick showing the adhesivity between the carbon fiber and matrix resin constituting the composite matrix. However, in a composite material produced using a carbon fiber containing the above-mentioned sizing agent, when a tension is added thereto in its fiber axis direction, the tension is not dissipated into the whole portion of the carbon fiber and instead is concentrated in a relatively small number of carbon fibers. Consequently, this small number of carbon fibers are broken, it is repeated, and finally the whole composite material comes to be broken. Therefore, the strength of the composite material in the fiber axis direction is not large as expected and its interlaminar shear strength is low currently.

### Disclosure of the Invention

In order to solve the above problems, the present inventor made a study on a sizing composition to be added to a carbon fiber. In the course of the study, the present inventor found that when a sizing agent composition is mixed with a curing agent and the mixture is heat-treated to prepare a cured material of the sizing agent composition, the cured material is used as a test sample and measured for dynamic viscoelasticity to obtain a tan δ of α relaxation peak (α_{tan δ}) and a tan δ of β relaxation peak (β_{tan δ}), and there is calculated a product of these two values, i.e. an α_{tan δ} β_{tan δ}, this product has a large influence on the strength of a composite material produced using a resin and a carbon fiber to which the above sizing agent has been added, in its normal-to-fiber-axis direction. A further in-depth study by the present inventor confirmed that any of the α_{tan δ} and the β_{tan δ} has no correlation with the strength of the composite material in its normal-to-fiber-axis direction.

The present invention has been completed based on the above findings and aims at providing a carbon fiber strand capable of giving a carbon fiber-reinforced resin composite material superior in interlaminar shear strength greatly connected with its breaking strength in its normal-to-fiber-axis direction.

The present invention which achieves the above aim, is as follows.
[1] A carbon fiber strand obtained by impregnating a carbon fiber with a sizing agent composition containing a sizing agent comprising at least two kinds of epoxy resins, wherein the sizing agent composition is such that, when it is mixed with a given curing agent at proportions of 100 parts by mass (the sizing agent composition) and 30 parts by mass (the curing agent) to make a composition for estimation, the composition for estimation is heat-treated at 130°C for 2 hours, and the resulting cured material for estimation is measured for dynamic viscoelasticity to obtain its tan δ of α relaxation peak and its tan δ of β relaxation peak, their product α_{tan δ} β_{tan δ} is 0.07 to 0.2.
[2] A carbon fiber strand set forth in [1], wherein the sizing agent composition has a Viscosity of 100 to 10,000 poises at 30°C.
[3] A carbon fiber strand set forth in [1], wherein the sizing agent contained in the sizing agent composition contains a PO/EO block copolymer in an amount of less than 30% by mass relative to the epoxy resins.
[4] A carbon fiber strand set forth in [1], wherein the content of the sizing agent composition is 0.3 to 5.0% by mass.
[5] A carbon fiber strand set forth in [1], which is constituted by 1,000 to 50,000 single fibers.
[6] A carbon fiber strand set forth in [1], wherein the carbon fibers constituting the carbon fiber strand show a surface oxygen concentration ratio O/C of 0.05 to 0.3 when measured by X-ray photoelectron spectroscopy.

The carbon fiber strand of the present invention is constituted by impregnating a carbon fiber strand with a sizing composition which, when cured under particular conditions, shows an α_{tan δ} β_{tan δ} of 0.07 to 0.2; therefore, by using this carbon fiber strand as a reinforcing material, there can be produced a carbon fiber-reinforced composite material superior in interlaminar shear strength.

### Brief Description of the Drawing

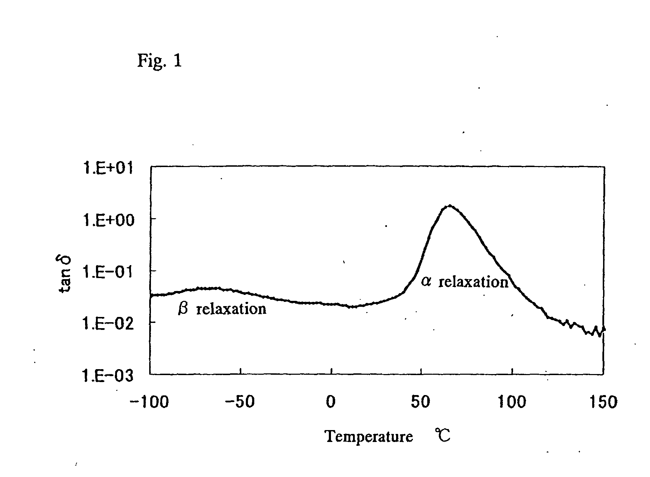

Fig. 1 is a chart showing an example of the dynamic viscoelasticity curve of a cured material for estimation obtained by curing a sizing composition.

### Best Mode for Carrying Out the Invention

The carbon fiber strand of the present invention is obtained by impregnating a carbon fiber with a sizing agent composition.

The carbon fiber strand is a bundle of a large number of carbon single fibers (filaments). It consists of preferably 1,000 to 50,000 carbon single fibers. Each carbon single fiber preferably has 30 to 5,000 dtex.

Specific examples of the carbon single fiber constituting the carbon fiber strand are a polyacrylonitrile (PAN)-based carbon fiber, a pitch-based carbon fiber and a rayon-based carbon fiber. Of these carbon fibers, the PAN-based carbon fiber is particularly preferred for the handleability, passability through production steps, etc. Here, as the PAN-based carbon fiber, there is generally used one obtained by making into a carbon fiber a copolymer which contains a acrylonitrile structural unit as the main component and a vinyl monomer unit (e.g. itaconic acid, acrylic acid or acrylic ester) in an amount of 10 mole % or less.

When a composite material is produced using the carbon fiber strand and a matrix resin, each carbon fiber constituting the carbon fiber strand preferably has an oxygen concentration ratio O/C at carbon fiber surface, of 0.05 to 0.3 when measured by X-ray photoelectron spectroscopy, in order to increase the adhesivity between the carbon fiber and the matrix resin. A carbon fiber having a surface oxygen concentration ratio of less than 0.05 is inferior in its adhesivity with matrix resin; therefore, a composite material produced using such a carbon fiber is low in physical properties. Meanwhile, a carbon fiber having a surface oxygen concentration ratio of more than 0.3 is per se low in strength and therefore is not preferred.

Control of the surface oxygen concentration ratio of the carbon fiber in the above range can be achieved by, in the steps of production of the carbon fiber, carbonizing a raw material fiber to obtain a carbon fiber and then subjecting it to a surface treatment.

The surface treatment includes a liquid phase treatment, a gas phase treatment, etc. A liquid phase surface treatment by electrolysis is preferred from the standpoints of productivity, uniform treatment, stability, etc. These surface treatments per se are known.

As the yardstick employed for controlling the degree of surface treatment of carbon fiber, there is preferred a surface oxygen concentration ratio O/C of carbon fiber which is measured by X-ray photoelectron spectroscopy (XPS).

In the present invention, the O/C is determined according to the following procedure using an X-ray photoelectron spectrometer, ESCA JPS-9000 MX, produced by Japan Electron Optical Laboratory Co., Ltd. That is, a sizing agent-removed carbon fiber is placed in a measurement chamber of ESCA maintained at a low pressure of 10 to 6 Pa; then, an X-ray generated under the conditions of 10 kV (electron beam acceleration voltage) and 10 mA is applied to the carbon fiber with Mg used as a counter pole, and the spectra of the photoelectrons emitted, by the application, from the carbon atom and oxygen atom of carbon fiber surface are recorded; and an O/C is calculated from the ratio of the areas of the individual spectra.

The proportions of the photoelectrons emitted differ depending upon the individual elements. In the case of using the X-ray photoelectron spectrometer, ESCA JPS-9000 MX, produced by Japan Electron Optical Laboratory Co., Ltd., the conversion factor determined based on the characteristics of the apparatus is 2.69.

The carbon fiber as necessary subjected to a surface treatment as above is preferably washed thoroughly to remove the electrolyte which adhered during the surface treatment.

In the present invention, the sizing agent composition to be impregnated into the carbon fiber contains, as the main component, an epoxy type sizing agent mixture comprising at least two kinds, preferably two to five kinds of epoxy resins. Since epoxy resin is in wide use as a matrix resin of carbon fiber-reinforced resin, there is used, in the sizing agent composition, a mixture of at least two kinds of epoxy resins in an amount of at least 50% by mass, preferably at least 60% by mass, particularly preferably at least 70% by mass.

As to the epoxy type sizing agent, there is no particular restriction and a commercial epoxy type sizing agent can be used. It can be exemplified by bisphenol A type epoxy resin, bisphenol F type epoxy resin, dimer acid type epoxy resin, glycidyl ester type epoxy resin, polyfunctional epoxy resins (e.g. amino epoxy and novolac type epoxy), and modified epoxy resins [e.g. elastomer (styrene-butadiene elastomer or the like)-modified epoxy resin and urethane-modified epoxy resin]. The epoxy resin is preferably liquid at room temperature.

Examples of the chemical structural formulas of commercial epoxy type sizing agents are shown below.

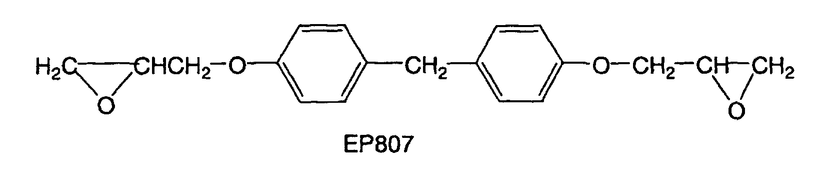

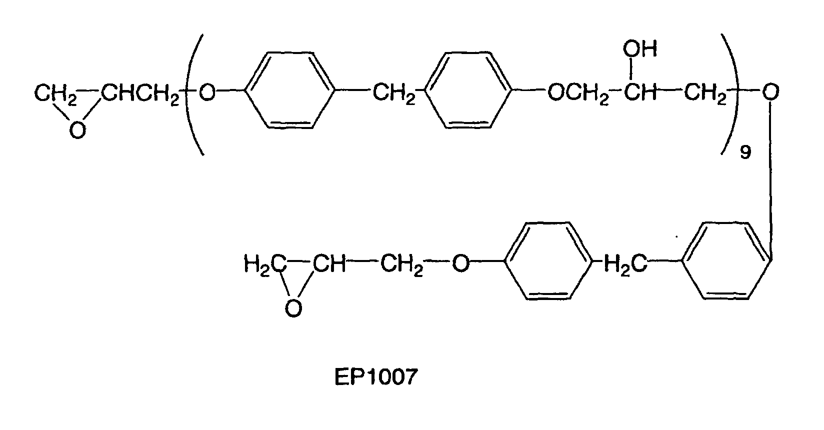

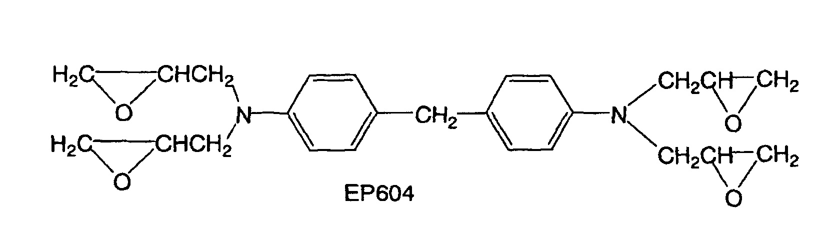

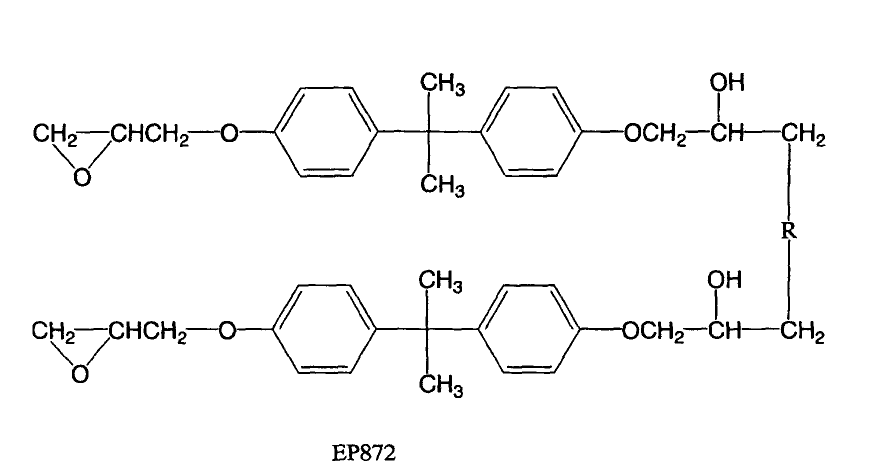

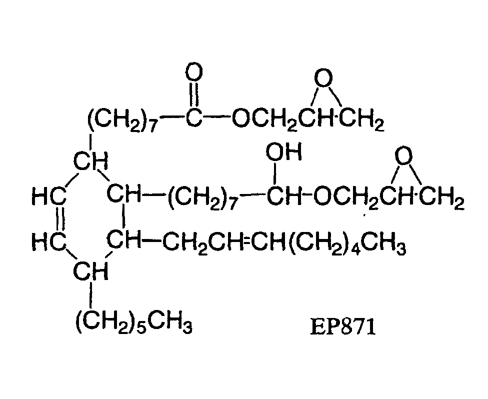

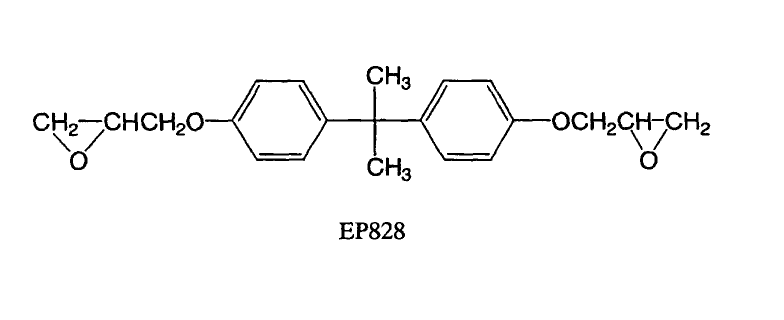

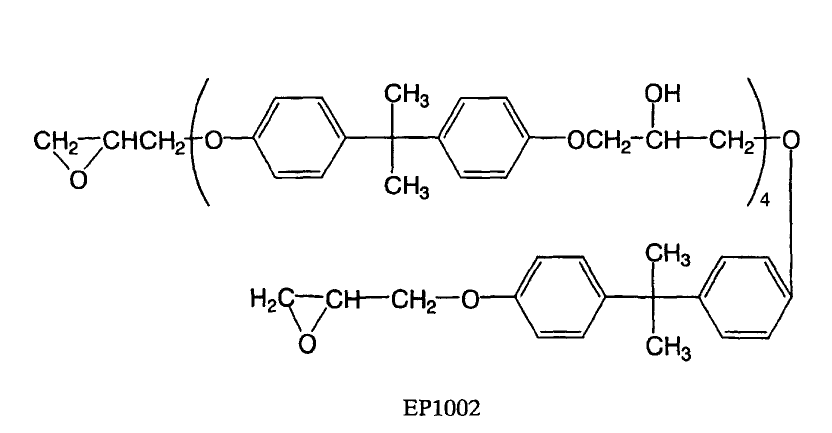

The sizing agent composition may contain a known sizing agent other than the epoxy type sizing agent, and various additives and auxiliary agents.

The additives and auxiliary agents include a known dispersing agent, a surfactant, an emulsifier, a lubricant, a stabilizer, etc.

The sizing agent other than the epoxy type sizing agent can be exemplified by resins such as polyurethane, polyester, polyamide and the like.

The sizing agent other than the epoxy type sizing agent can be exemplified by known sizing agents such as polyalkyl ether, unsaturated polyester, poly(vinyl ester), acrylic resin and the like.

A particularly preferred sizing agent other than the epoxy type sizing agent is a propylene oxide (PO)/ethylene oxide (EO) block copolymer. As the PO/EO block copolymer, there can be used one which is known as an emulsifier. Specifically, there is preferred a PO/EO block copolymer having a propylene oxide and ethylene oxide molar ratio of 2∼8 : 8∼2 and a viscosity at 25 °C of 5,000 to 30,000 mPa·s.

The sizing agent composition contains the propylene oxide (PO)/ethylene oxide (EO) block copolymer in an amount of preferably less than 30% by mass, more preferably 5% by mass to less than 30% by mass.

When a sizing agent composition containing the propylene oxide (PO)/ethylene oxide (EO) block copolymer is added to a carbon fiber strand, the resulting carbon fiber strand is used to produce a composite material, and the composite material undergoes an external stress, the external stress is not concentrated in a small region of the composite material and is dissipated uniformly therein. As a result, the composite material shows a high interlaminar shear strength.

The lubricant which is liquid at room temperature can be exemplified by a higher aliphatic ether type polyoxyethylene adduct, a higher aliphatic polyoxyethylene adduct, a higher fatty acid ester of polyhydric alcohol, and a polyoxyethylene adduct of higher fatty acid ester of polyhydric alcohol. These are known lubricants.

The surfactant may be any of nonionic type, cationic type and anionic type. By adding auxiliary agents such as lubricant, surfactant and the like to the sizing agent composition, the carbon fiber impregnated with the composition is improved in handleability, fretting resistance, fluffing resistance, and impregnability with sizing agent.

The sizing agent composition used in the present invention contains the above-mentioned sizing agent and, as necessary, additives and auxiliary agents. As described below, the sizing agent composition shows an intended dynamic viscoelasticity when it is mixed with a particular curing agent to prepare a composition for estimation and heat-treated to prepare a cured material for estimation.

That is, the cured material for estimation prepared using the sizing agent composition used in the present invention gives a product (α_{tan δ} β_{tan δ}) of 0.07 to 0.2, preferably 0.07 to 0.15, wherein the α_{tan δ} β_{tan δ} is a product of a tan δ of α relaxation peak (α_{tan δ}) and a tan δ of β relaxation peak (β_{tan δ}), both obtained from a measured dynamic viscoelasticity curve shown in Fig. 1.

The present inventor thought that a sizing agent composition capable of giving a cured material for estimation showing a α_{tan δ} β_{tan δ} of 0.07 to 0.2 is preferred, based on the following reason. That is, the tan δ values obtained from the dynamic viscoelasticity measurement of the cured material for estimation are yardsticks for evaluating the dissipation of thermal energy relative to external stress and, from these values, the toughness of a material can be estimated. Specifically explaining, high toughness can be expected with a material of high tan δ values. When the sizing agent is an epoxy resin, there exist mainly an α relaxation attributed to the molecular movement of polymer main chain and a β relaxation attributed to local movement. These two relaxations are thought to be main factors governing the toughness of a material. Hence, the present inventor thought that by taking a large value for the product of the two relaxations (α_{tan δ} and β_{tan δ}), i.e. α_{tan δ} β_{tan δ}, the properties of a carbon fiber-reinforced resin can be improved.

A α_{tan δ} β_{tan δ} of less than 0.07 is not preferred because the sizing agent composition in composite material, when cured, is low in toughness and the carbon fiber-reinforced resin (composite material) is inferior in properties.

When the α_{tan δ} β_{tan δ} is more than 0.2, the cured sizing agent composition in composite material, is low in hardness and is unable to remain stable at the interface between the matrix resin and the carbon fiber.

The curing agent added to the sizing agent composition for preparation of a composition for evaluation has the following chemical structure. This compound is a curing agent for epoxy resin, well known to those skilled in the art as Kayahard MCD (trade name) (a product of Hitachi Chemical Company, Ltd.). The use amount of the curing agent is 30 parts by mass relative to 100 parts by mass of the sizing agent composition. The heat treatment conditions are 2 hours at 130°C.

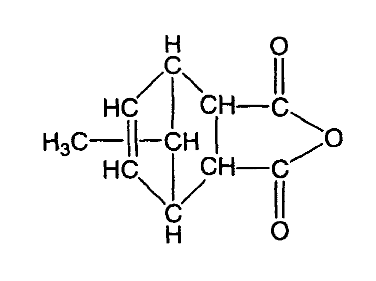

The sizing agent composition used in the present invention has a viscosity at 30°C of preferably 100 to 10,000 poises. When the viscosity is less than 100 poises, the carbon fiber strand impregnated with the sizing agent composition is too soft. In this case, when the strand comes in touch with a guide roller in a prepreg production step, a filament winding step, etc., fluffing, for example, tends to occur. When the viscosity is more than 10,000 poises, the carbon fiber strand obtained by impregnating a carbon fiber with the sizing agent composition is too hard and moreover the impregnatability of a resin into the carbon fiber strand is inferior.

In the present invention, the sizing agent composition is impregnated into the above-mentioned carbon fiber to obtain a carbon fiber strand of the present invention.

The impregnation amount of the sizing agent composition in the carbon fiber strand is preferably 0.3 to 5.0% by mass, more preferably 1.0 to 4.0.

When the impregnation amount of the sizing agent composition in the carbon fiber strand is less than 0.3% by mass, the bundling of the carbon fiber strand is inferior. Further, the composite material produced using this carbon fiber strand is insufficient in adhesivity between the carbon fiber and the matrix resin and is low in shear strength.

When the content of the sizing agent composition is more than 5.0% by mass, the carbon fiber strand is inferior in spreadability. As a result, in production of a composite material, the infiltrability of the matrix resin into the carbon fiber strand is low, which is not preferred.

The method for impregnation of the sizing agent composition into the carbon fiber can be conducted by any method selected from spraying method, dipping method, transfer method, etc., all well-known to those skilled in the art. The dipping method is preferred because it is superior in general-purpose properties, efficiency and uniform impregnation. When the carbon fiber is dipped in the sizing agent composition in the dipping method, it is preferred that the spreading and squeezing of the carbon fiber are conducted repeatedly using a roller provided in the sizing agent composition to infiltrate the sizing agent composition sufficiently into the carbon fiber strand.

The impregnation method of the sizing agent composition includes a solution method which comprises dipping a carbon fiber in a solution of a sizing agent composition containing at least two kinds of epoxy resins, etc., dissolved in a solvent such as acetone or the like; and an emulsion method which comprises dipping a carbon fiber in an aqueous emulsion obtained by emulsifying a sizing agent composition in water using an emulsifier or the like. The emulsion method is preferred from the standpoint of safety to human body and prevention of pollution of natural environment.

After the sizing agent composition has been impregnated into the carbon fiber, ordinarily the carbon fiber impregnated with the sizing agent is sent to a drying step to remove the dispersing agent (water or solvent) which adhered to the carbon fiber during impregnation of the sizing agent composition. As the drying method which can be employed in the drying step, there are, for example, a method of passing the carbon fiber impregnated with the sizing agent composition through a drying oven, and a method of contacting the carbon fiber impregnated with the sizing agent composition, with an overheated roller. The drying temperature is not particularly restricted; however, it is set ordinarily at 80 to 200°C when there is employed an aqueous emulsion type sizing agent composition of general use. It is possible that after the drying step, a heat treatment step of 200°C or more is conducted to adjust the viscosity of the sizing agent composition in the carbon fiber strand.

The present invention is described more specifically below by way of Examples.

### Examples

Physical properties were measured according to the following methods.

### <Dynamic viscoelasticity measurement>

100 parts by mass of a sizing agent and 30 parts by mass of a curing agent(Kayahard MCD, a product of Hitachi Chemical Company, Ltd.) were mixed to prepare a composition for estimation; the composition was molded and cured at 130°C for 2 hours in a mold to obtain a cured material for estimation. This cured material for estimation was cut into a size of 30 mm (length) x 6 mm (width) x 3 mm (thickness) to obtain a test piece for measurement of dynamic viscoelasticity.

The test piece was measured for dynamic viscoelasticity using a dynamic mechanical analyzer (Model Rhogel E-4000, a product of UBM). The measurement conditions were temperature elevation rate: 4°C /min, frequency: 10 Hz; and measurement temperature range: -100 to 200°C.

From the dynamic viscoelasticity curve obtained (an example of the curve is shown in Fig. 1), a tan δ of α relaxation peak (α_{tan δ}) and a tan δ of β relaxation peak (β_{tan δ}) were determined, and their product α_{tan δ} β_{tan δ} was calculated.

### <Interlaminar shear strength (ILSS)>

A resin composition was prepared by mixing 70 parts by mass of EPN 1138 (trade name) (a phenolic novolac type epoxy resin produced by Ciba Geigy Japan Limited), 12 parts by mass of Epikote 834 (trade name) (a bisphenol A type epoxy resin produced by Japan Epoxy Resins Co., Ltd.), and 18 parts by weight of Epikote 1002 (trade name) (a bisphenol A type epoxy resin produced by the same company.). To the resin composition were added 5 parts by mass of a curing agent DICY (dicyandiamide produced by the same company.) and 10 parts by mass of a curing accelerator DUMU (3-[3,4-dichlorophenyl]-1,1-dimethylurea produced by Hodogaya Chemical Co., Ltd.) to prepare a resin composition for prepreg production. This composition was coated on a release paper using a film coater, in an amount of 44 g/m², to obtain a resin film consisting of a release paper and a resin composition layer formed thereon.

On this resin film was placed a carbon fiber strand impregnated by the sizing agent composition at equal intervals in a stretched state, and they were heated to impregnate the resin of the resin film into the carbon fiber strand to produce a unidirectional (UD) prepreg having an area weight of 150 g/m² and 37% by mass in impregnated resin content.

The UD prepreg was laminated in a plurality of layers so as to give a thickness of 3 mm. The laminate was placed in a mold and molded at 130°C for 2 hours at a pressure of 686 kPa (7 kg/cm²) to produce a unidirectional carbon fiber-reinforced plastic plate (CFRP plate). This CFRP plate was measured for ILSS at room temperature according to ASTM D 2344.

### Examples 1 to 8 and Comparative Examples 1 to 3

A sizing agent-free carbon fiber strand (Besfight produced by Toho Tenax Co., Ltd., 24,000 filaments) having a surface oxygen concentration ratio O/C of 0.2 as measured by X-ray photoelectron spectroscopy, was continuously dipped in a sizing bath. Each sizing agent composition aqueous emulsion used was an aqueous emulsion obtained by emulsifying 100 parts by mass of each sizing agent composition [whose formulation is shown in Table 1 and which is a mixture of two or three components of different molecular weights selected from bisphenol A type epoxy resins (Epikote 828 and Epikote 1002, products of Japan Epoxy Resins Co., Ltd.), a bisphenol F type epoxy resin (Epikote 807, a product of Japan Epoxy Resins Co., Ltd.), a dimer acid type epoxy resin (Epikote 871, a product of Japan Epoxy Resins Co., Ltd.), a tetrafunctional aminoepoxy resin (Epikote 604, a product of Japan Epoxy Resins Co., Ltd.), a glycidyl ester type epoxy resin (Epikote 191P, a product of Japan Epoxy Resins Co., Ltd.) and an elastomer-modified epoxy resin (Epikote YX 310, a product of Japan Epoxy Resins Co., Ltd.)], with 20 parts by mass of a PO/EO block copolymer [Leocon ED274R (trade name) produced by Lion Corporation, viscosity: 6,900 mPa·s at 25°C].

The carbon fiber strand impregnated with each sizing agent composition emulsion was dried (150°C for 3 minutes) to remove the water of the strand to obtain each carbon fiber strand. At that time, the bath concentration was adjusted to obtain carbon fiber strands shown in Table 1. By using these carbon fiber strands, ILSS were measured. The results are shown in Tables 1 and 2.

Meanwhile, each sizing agent composition mentioned above was heat-treated and cured according to the method described in the above <dynamic viscoelasticity measurement>, to produce each test piece for dynamic viscoelasticity measurement. These test pieces were measured for dynamic viscoelasticity to obtain respective dynamic viscoelasticity curves and, from the curves, an α_{tan δ} β_{tan δ} of each sizing agent composition was calculated. The results are shown in Tables 1 and 2.

As shown in Table 1, Examples 1 to 6 each showing an α_{tan δ} β_{tan δ} of 0.07 to 0.2 are high in ILSS. However, as shown in Table 2, Comparative Examples 1 to 6 each showing anα_{tan δ} β_{tan δ} not falling in the above range are low in ILSS.

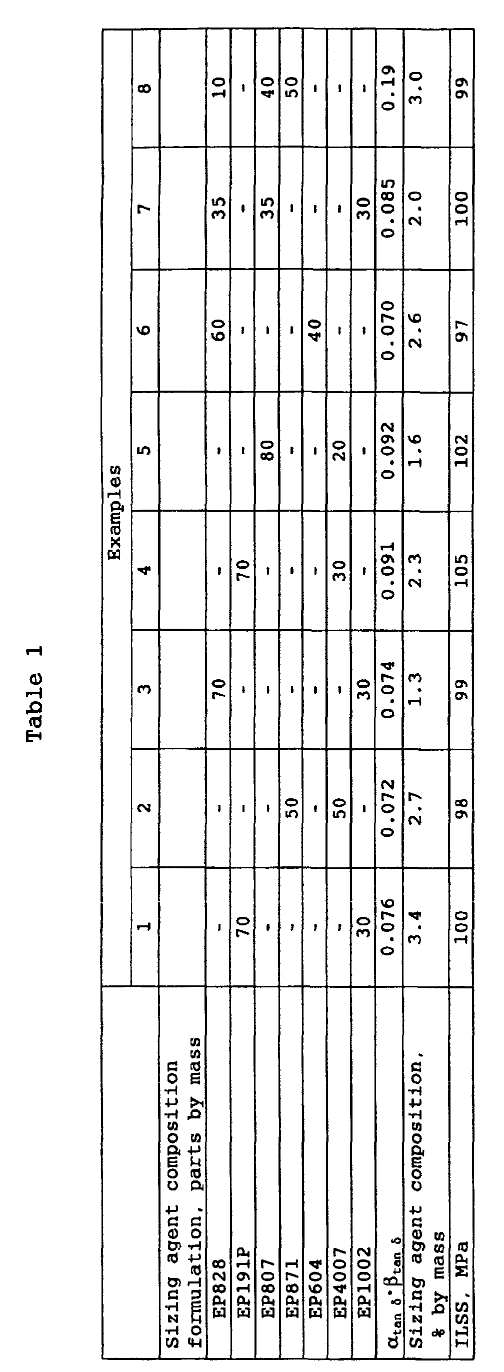

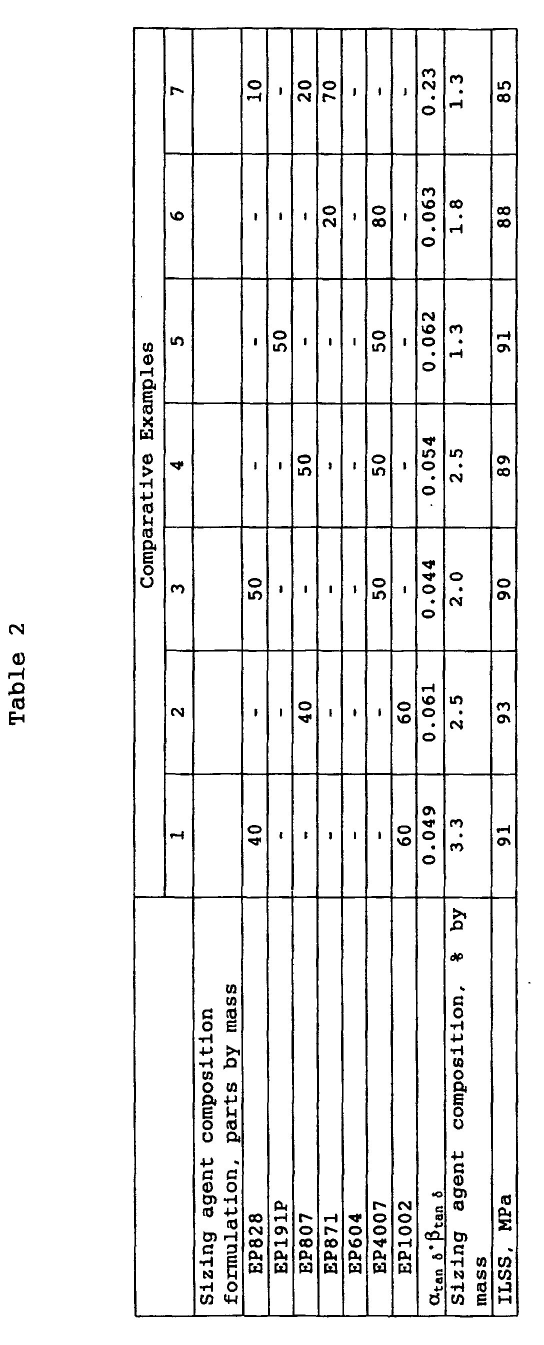

## Claims

1. A carbon fiber strand obtained by impregnating a carbon fiber with a sizing agent composition containing a sizing agent comprising at least two kinds of epoxy resins, wherein the sizing agent composition is such that, when it is mixed with a given curing agent at proportions of 100 parts by mass (the sizing agent composition) and 30 parts by mass (the curing agent) to make a composition for estimation, the composition for estimation is heat-treated at 130 °C for 2 hours, and the resulting cured material for estimation is measured for dynamic viscoelasticity to obtain its tan δ of α relaxation peak and its tan δ of β relaxation peak, their product α_{tan δ} β_{tan δ} is 0.07 to 0. 2.

2. A carbon fiber strand according to Claim 1, wherein the sizing agent composition has a Viscosity of 100 to 10,000 poises at 30°C.

3. A carbon fiber strand according to Claim 1, wherein the sizing agent contained in the sizing agent composition contains a PO/EO block copolymer in an amount of less than 30% by mass relative to the epoxy resins.

4. A carbon fiber strand according to Claim 1, wherein the content of the sizing agent composition is 0.3 to 5.0% by mass.

5. A carbon fiber strand according to Claim 1, which is constituted by 1,000 to 50,000 single fibers.

6. A carbon fiber strand according to Claim 1, wherein the carbon fibers constituting the carbon fiber strand show a surface oxygen concentration ratio O/C of 0.05 to 0.3 when measured by X-ray photoelectron spectroscopy.
